# EUROPÄISCHE PATENTANMELDUNG

(11) **EP 4 779 103 A1**
(43) Veröffentlichungstag der Anmeldung: **22.07.2026**
(21) Anmeldenummer: 26151578.7
(22) Anmeldetag: 13.01.2026
(51) Int. Cl.: E04G 7/02, E05D 1/00, E05D 1/04, F16B 7/18, F16C 11/04, F16C 11/06

(54) **VORRICHTUNG ZUR VERBINDUNG MINDESTENS ZWEIER OBJEKTE; KONSTRUKT; VERFAHREN ZUR AUSBILDUNG EINES GELENKS ZUR VERBINDUNG ZWEIER OBJEKTE**

(30) Priorität: 21.01.2025 DE 102025102005
(71) Anmelder: Mefa Befestigungs- und Montagesysteme GmbH, 74635 Kupferzell (DE)
(72) Erfinder: Scheidel, Ulrich, 95237 Weißdorf (DE)
(74) Vertreter: Patentanwälte Schuster, Müller & Partner mbB

(57) **Zusammenfassung**

Es werden eine Vorrichtung (1) zur Verbindung zweier Objekte, ein Konstrukt und ein Verfahren zur Ausbildung eines Gelenkes zur Verbindung zweier Objekte vorgeschlagen, wobei die Vorrichtung zur Verbindung mindestens zweier Objekte ein erstes Bauteil (2) mit mindestens einer Öffnung (3) und mindestens einem gebogenen Bereich (4) mit mindestens einer primären Biegungsrichtung, wobei die Öffnung (3) mindestens teilweise in dem gebogenen Bereich (4) angeordnet ist, mindestens ein zweites Bauteil (5) mit mindestens einer Öffnung (7), und mindestens ein Verbindungelement (8), wobei mindestens ein Verbindungselement (8) durch mindestens eine Öffnung (3) des ersten Bauteils (2) hindurchführbar ist, umfasst und mindestens eine Öffnung (3) des ersten Bauteils (2) in mindestens einer Richtung einen Freiheitsgrad für eine Bewegung des mindestens einen Verbindungselementes (8) aufweist, wobei mindestens ein Freiheitsgrad mindestens teilweise parallel zu der primären Biegungsrichtung angeordnet ist und das erste Bauteil (2) relativ zu mindestens einem weiteren Bauteil (5) entlang mindestens eines Freiheitsgrades radial bewegbar ist, wodurch ein einfaches Gelenk gebildet wird.

## Beschreibung

### Stand der Technik

Die Erfindung geht aus von einer Vorrichtung zur Verbindung mindestens zweier Objekte, nach der Gattung des Anspruchs 1, einem Konstrukt, nach der Gattung des Anspruchs 8, und einem Verfahren zur Ausbildung eines Gelenkes zur Verbindung zweier Objekte, nach der Gattung des Anspruchs 9.

Vorrichtungen, insbesondere Gelenke, zur Verbindung von zwei Objekten im Allgemeinen sind seit langem Stand der Technik. Dabei wird häufig zwischen Scharnier- und Kugelgelenken unterschieden, die je nachdem unterschiedliche Aufgaben wahrnehmen können. Je nach Anwendungsbereich finden sich unterschiedliche konstruktive Ausgestaltungen. Im Gerüstbau sind Gelenke bisher noch wenig im Einsatz, da es bei Gerüsten primär um die statische Stabilität geht und die Beweglichkeit, die ein Gelenk bietet, diesem entgegenläuft. Am nächsten heran an klassische Gelenke kommen Knoten, die in unterschiedlicher Ausgestaltung im Gerüstbau verwendet werden. Ein Knoten führt mehrere längliche Elemente, z.B. Streben, zusammen und erlaubt eine Verbindung selbiger, wobei häufig rechte Winkel realisiert werden. Derartige starre Konstruktionen finden sich beispielsweise in den Druckschriften WO 2005/113914 A2, EP 3 878 533 A1, GB 1 322 498 A oder US 2016/0032600 A1. Eine flexiblere Anordnung findet sich beispielsweise in den Druckschriften KR 2023 0094510 A oder US 4,566,819 A. All diesen Vorrichtungen gemein ist, dass sie entweder starr sind und keine Flexibilität bieten oder komplex und sperrig sind.

Der Erfindung liegt daher die Aufgabe zugrunde, eine die Nachteile des Standes der Technik, überwindende Vorrichtung zur Verbindung mindestens zweier Objekte, ein die Nachteile des Standes der Technik überwindendes Konstrukt und ein die Nachteile des Standes der Technik überwindendes Verfahren zur Ausbildung eines Gelenkes zur Verbindung zweier Objekte bereitzustellen

### Die Erfindung und ihre Vorteile

Die erfindungsgemäße Vorrichtung zur Verbindung mindestens zweier Objekte, mit den Merkmalen des Anspruchs 1, hat demgegenüber den Vorteil, dass die Vorrichtung ein erstes Bauteil mit mindestens einer Öffnung und mindestens einem gebogenen Bereich mit mindestens einer primären Biegungsrichtung, wobei die Öffnung mindestens teilweise in dem gebogenen Bereich angeordnet ist, mindestens ein zweites Bauteil mit mindestens einer Öffnung und mindestens ein Verbindungelement, wobei mindestens ein Verbindungselement durch mindestens eine Öffnung des ersten Bauteils hindurchführbar ist, umfasst, wobei mindestens eine Öffnung des ersten Bauteils in mindestens einer Richtung einen Freiheitsgrad für eine Bewegung des mindestens einen Verbindungselementes aufweist, wobei mindestens ein Freiheitsgrad mindestens teilweise parallel zu der primären Biegungsrichtung angeordnet ist und das erste Bauteil relativ zu mindestens einem weiteren Bauteil entlang mindestens eines Freiheitsgrades radial bewegbar ist, wodurch ein einfaches Gelenk zur Verbindung mindestens zweier Objekte geschaffen wird. Das Gelenk kann sowohl als Scharniergelenk (ein Bewegungsfreiheitsgrad) als auch als Kugelgelenk (mehrere Bewegungsfreiheitsgrade) ausgestaltet sein. Bevorzugt weisen die gebogenen Bereiche einen Biegegrad von höchstens 350°, besonders bevorzugt von mindestens 45° und höchstens 270 °.

Die primäre Biegungsrichtung definiert sich als die Richtung, in der die stärkste Biegung bzw. der größte Biegegrad vorliegt, wobei sich der Ausdruck "Biegung" sich zunächst nur auf die räumliche Ausgestaltung des Bauteils bezieht. Diese kann durch ein Biegeverfahren im Guss oder in anderen Fertigungsverfahren hergestellt sein.

Bei den Öffnungen handelt es sich um makroskopische Öffnungen, die von einer Seite des Bauteils hin zur anderen Seite des Bauteils durchgängig sind und nicht um einseitig geöffnete Taschen. Es wäre auch denkbar, dass mehrere Öffnungen über den gebogenen Bereich verteilt angeordnet sind, wodurch kein kontinuierliches Verstellen des Gelenkwinkels mehr möglich ist, sondern ein stufenweises Verstellen erreicht wird. Die Dimension der Öffnungen, insbesondere ihre Ausdehnung in Richtung der Biegerichtung, legt fest, wie weit das Gelenk klappbar ist, indem es die Beweglichkeit des mindestens einen Verbindungselementes einschränkt.

Nach einer vorteilhaften Ausgestaltung der erfindungsgemäßen Vorrichtung ist das mindestens eine Verbindungelement eine Schraube, ein Bolzen, oder dergleichen. Denkbar wäre es, dass das Verbindungselement am ersten oder zweiten Bauteil befestigt ist.

Nach einer zusätzlichen vorteilhaften Ausgestaltung der erfindungsgemäßen Vorrichtung ist an mindestens einem Ende des mindestens einen Verbindungelementes mindestens ein entsprechendes Konterelement angeordnet, wobei das Konterelement ein Splint, eine oder mehrere Muttern oder dergleichen ist. Diesbezüglich kann es sich bei dem Konterelement unter anderem um eine einfache Mutter oder eine Kontermutterkonstruktion aus zwei Muttern handeln. In diesem Zusammenhang wäre es denkbar, dass das Verbindungselement arretierbar ist bzw. derart gestaltet ist, dass es das Gelenk arretieren kann. Dies kann beispielsweise derart gestaltet sein, dass die vorgespannte Verbindung zwischen Konterelement und Verbindungselement fester gezogen wird, um einen Kraftschluss mit den Bauteilen zu erreichen, ebenfalls denkbar wäre ein Formschluss, der durch ein weiter Eindrehen in vorgesehene Rillen erreicht wird.

Nach einer zusätzlichen vorteilhaften Ausgestaltung der erfindungsgemäßen Vorrichtung ist das erste und/oder das mindestens zweite Bauteil aus einem Flachblech, Rohr oder Profil durch ein Biegeverfahren, als Frästeil oder Gussteil gefertigt, wodurch das Auftreten von Schweißnähten und dergleichen vermieden wird.

Nach einer zusätzlichen vorteilhaften Ausgestaltung der erfindungsgemäßen Vorrichtung ist an dem ersten und/oder dem mindestens zweiten Bauteil mindestens ein Befestigungselement angeordnet, wobei das mindestens eine Befestigungselement dazu eingerichtet ist, das Bauteil mit einem ersten und/oder mindestens einem zweiten Objekt reversibel oder fest zu verbinden. Denkbar wäre es, dass es sich bei den Objekten um Streben eines Konstruktes handelt. Je nach Ausgestaltung dieser Streben wäre es denkbar, dass das Befestigungselement eine Nut-Feder-Verbindung, eine Klemmverbindung, eine Schweißnaht und/oder eine kraft- und/oder formschlüssige Verbindung ist.

Nach einer zusätzlichen vorteilhaften Ausgestaltung der erfindungsgemäßen Vorrichtung ist um mindestens eines der Verbindungselemente, wobei dieses mindestens eine longitudinale Hauptausdehnung aufweist, mindestens eine Verdrehsicherung angeordnet, wobei die Verdrehsicherung eine Rotation des ersten und/oder mindestens zweiten Bauteils um die longitudinale Hauptausdehnung mindestens einschränkt. Die longitudinale Hauptausdehnung ist beispielsweise bei einer Schraube oder einem Bolzen entlang des Schaftes.

Nach einer diesbezüglichen vorteilhaften Ausgestaltung der erfindungsgemäßen Vorrichtung schränkt die Verdrehsicherung die Rotation um die longitudinale Hauptausdehnung mindestens auf einen Winkelbereich von höchstens 180° ein. Dies kann beispielsweise dadurch erreicht werden, dass in den ersten und/oder mindestens zweiten Bauteil und/oder einem verdrehgesicherten, an diesen gelagerten Bauteil eine Öffnung vorgesehen ist, die eine rechteckige Form hat und die Verdrehsicherung als Rhombus mit einer und/oder zwei abgerundeten Ecke(n) ausgebildet ist, wodurch ein Verdrehen lediglich bis zum Anschlag der nicht abgerundeten Ecke an eine Seitenwand der Öffnung möglich ist. Die Verdrehsicherung kann dabei auch über unterschiedliche Abschnitte verfügen, die in zwei unterschiedliche verbundene Bauteile eingreifen und beispielsweise für eines eine Rotation in eine Richtung erlauben und für das andere in die andere Richtung.

Das erfindungsgemäße Konstrukt, mit den Merkmalen des Anspruchs 8, hat gegenüber dem Stand der Technik den Vorteil, dass das Konstrukt eine Vielzahl länglicher Elemente umfasst und dass das Konstrukt mindestens ein Gelenk aufweist, wobei das mindestens eine Gelenk mindestens zwei der länglichen Elemente miteinander verbindet und das mindestens eine Gelenk eine Vorrichtung nach einem der Ansprüche 1 bis 7 ist. Durch die Möglichkeit das Gelenk auch zu arretieren können unterschiedliche konstruktive Verbindungen und Knoten geschaffen werden, bei denen die länglichen Elemente in beliebiger Ausrichtung angeordnet sind. Werden beispielsweise die Bauteile auch noch gegeneinander verdreht kann das Gelenk sowohl in einer ersten Richtung, welche mit dem ersten Bauteil assoziiert ist, und in einer zweiten Richtung, die mit dem zweiten Bauteil assoziiert ist, bewegt werden. Das Konstrukt kann beispielsweise ein Gerüst, ein Rahmen, eine Haltekonstruktion oder ein Gestell sein.

Das erfindungsgemäße Verfahren zur Ausbildung eines Gelenkes zur Verbindung zweier Objekte, mit den Merkmalen des Anspruchs 9, hat gegenüber dem Stand der Technik den Vorteil, dass das Gelenk eine Vorrichtung nach einem der Ansprüche 1 bis 7 umfasst und das Gelenk derart gebildet wird, dass die Öffnung des ersten Bauteils mindestens teilweise überlappend mit mindestens einer Öffnung mindestens eines weiteren Bauteils angeordnet wird oder ist, wobei eine Verbindungsstelle geschaffen wird oder wurde, mindestens ein Verbindungselement durch die Verbindungsstelle durchgeführt wird oder wurde, und das Verbindungselement gegen ein Hinausziehen gesichert wird. Dabei kann je nach Bedarf eine unterschiedlich starke Sicherung des Verbindungselementes erfolgen, die eine entsprechende Zugfestigkeit aufweist. Diese trägt in diesem Fall den Hauptteil der Zugfestigkeit des gesamten Gelenkes. Durch die Vermeidung von Schweißnähten weist das Bauteil zudem keine vorinduzierten Schwächungsstellen auf.

Nach einer vorteilhaften Ausgestaltung des erfindungsgemäßen Verfahrens wird oder ist eine Verdrehsicherung um das Verbindungselement angeordnet.

Weitere Vorteile und vorteilhafte Ausgestaltung der Erfindung sind der nachfolgenden Beschreibung, den Ansprüchen und den Zeichnungen entnehmbar.

### Zeichnungen

Bevorzugte Ausführungsbeispiele der erfindungsgemäßen Gegenstände sind in den Zeichnungen dargestellt und werden im Folgenden näher erläutert. Es zeigen
- Fig. 1: eine schematische Darstellung einer erfindungsgemäßen Vorrichtung,
- Fig. 2: eine Seitenansicht einer schematischen Darstellung einer erfindungsgemäßen Vorrichtung, gemäß Fig. 1,
- Fig. 3: eine Seitenansicht einer schematischen Darstellung einer alternativen erfindungsgemäßen Vorrichtung mit verlängerten gebogenen Bereichen,
- Fig. 4: eine Seitenansicht einer schematischen Darstellung einer alternativen erfindungsgemäßen Vorrichtung mit einer Hülsenmutter als Verbindungselement und einer Schraube als Konterelement,
- Fig. 5: eine Aufsicht einer schematischen Darstellung einer erfindungsgemäßen Vorrichtung mit Verdrehsicherung,
- Fig. 6: eine Seitenansicht einer schematischen Darstellung einer alternativen erfindungsgemäßen Vorrichtung mit einem abgekanteten gebogenen Bereich,
- Fig. 7: eine schematische Darstellung der erfindungsgemäßen Vorrichtung eingebaut in ein Konstrukt,
- Fig. 8: eine schematische Darstellung eines erfindungsgemäßen Füllkörpers,
- Fig. 9: eine schematische Darstellung eines alternativen erfindungsgemäßen Füllkörpers,
- Fig. 10: eine schematische Darstellung einer erfindungsgemäßen Verdrehsicherung und
- Fig. 11: eine schematische Darstellung einer alternativen erfindungsgemäßen Verdrehsicherung.

### Beschreibung der Ausführungsbeispiele

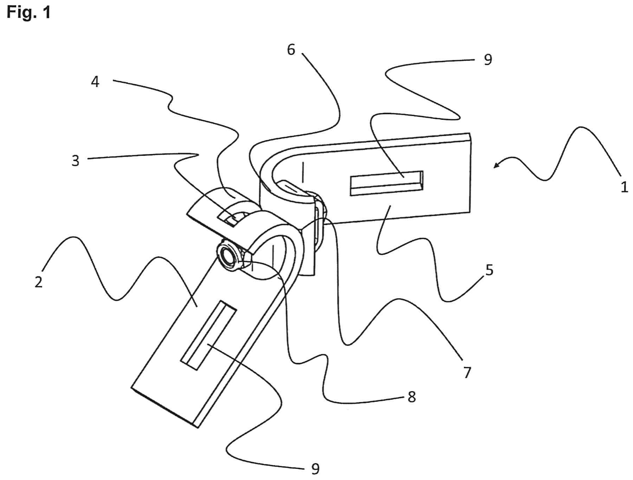

Fig. 1 zeigt eine schematische Darstellung einer erfindungsgemäßen Vorrichtung 1, wobei ein erstes Bauteil 2 mit einer Öffnung 3, die in einem gebogenen Bereich 4 angeordnet ist, mit einem zweiten Bauteil 5, welches ebenfalls einen gebogenen Bereich 6 mit einer Öffnung 7 aufweist, über ein Verbindungselement 8 verbunden ist. Die beiden Bauteile 2 und 5 sind im dargestellten Ausführungsbeispiel aus Flachblechen gebogen, wobei die Biegung 180° beträgt. Die in den gebogenen Bereichen 4 und 6 vorhandenen Öffnungen 3 und 7 sind rechteckig. Ein Verbindungselement 8, hier eine Schraube, kann durch die Öffnungen 3 und 7 geführt werden, wodurch das Bauteil 2 mit dem Bauteil 5 verbunden wird. Als Konterelement 10 kann eine Mutter fungieren. Sofern eine Verspannung der beiden Bauteile 2 und 5 über das Verbindungselement 8 noch hinreichend gering ist, kann das Bauteil 2 relativ zum Bauteil 5 bewegt werden, wobei die Bewegung zum einen entlang der Öffnung 3 und zum anderen entlang der Öffnung 7 erfolgen kann. Dabei sind die Öffnungen 3 und 7 zumindest teilweise parallel zur Biegerichtung angeordnet. Sofern beide Öffnungen 3 und 7 parallel zueinander ausgerichtet sind ergibt sich ein Scharniergelenk. Durch Erhöhen der Verspannungskraft, beispielsweise durch ein Anziehen des Konterelements 10, zwischen den Bauteilen 2 und 5 kann die Vorrichtung 1, die ein Gelenk ausbildet, in einer Position arretiert werden. Die dargestellten Bauteile 2 und 5 weisen darüber hinaus noch weitere Öffnungen 9 auf, die mit Befestigungselementen verwendet werden können. Beispielsweise wäre es denkbar, dass über diese weiteren Öffnungen 9 das Bauteil 2 oder 5 mit einem Teil eines Konstruktes verbunden wird. Die Ausgestaltung der Vorrichtung 1 erlaubt es sowohl parallel zueinander angeordnete Streben miteinander zu verbinden als auch über Eck verbundene Streben.

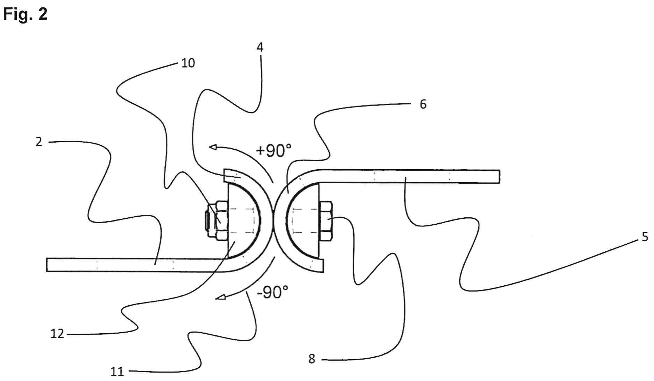

Fig. 2 zeigt eine Seitenansicht einer schematischen Darstellung einer erfindungsgemäßen Vorrichtung 1, gemäß Fig. 1. Aus dieser ist ersichtlich, dass bei der dargestellten Anordnung der Bauteile 2 und 5 zueinander ein Gelenkwinkel von 180° gebildet wird, sofern in der ersten Öffnung 3 durch eine entsprechende Länge des gebogenen Bereiches 4 eine Bewegung um 90° realisiert wird, und das gleiche für die Öffnung 7 des Bauteils 5 gilt. Die Pfeile 11 weisen die primäre Biegungsrichtung aus. Das Verbindungselement 8, hier eine Schraube, weist als Konterelement 10 eine Mutter auf. Zur Stabilisierung des Gelenkes können Füllkörper 12 verwendet werden, die ebenfalls auf das Verbindungselement 8 aufgezogen werden, um beispielsweise ein Zusammendrücken des gebogenen Bereiches 4 oder 6 zu verhindern. Denkbar wäre aber auch die Verwendung einer zweiten Mutter über der Ersten, zur Ausbildung einer Kontermutter.

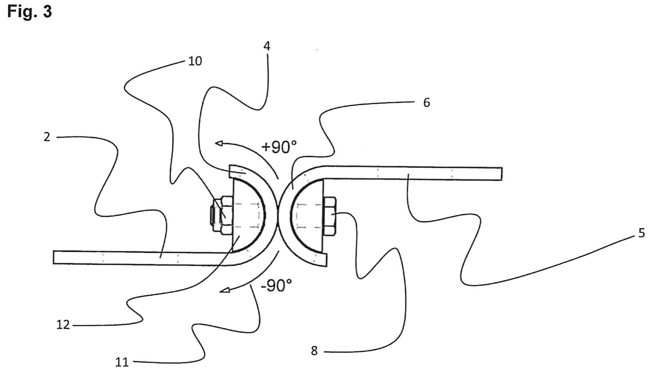

Fig. 3 zeigt eine Seitenansicht einer schematischen Darstellung einer alternativen erfindungsgemäßen Vorrichtung 1 mit verlängerten gebogenen Bereichen 4 und 6, wodurch ein Gelenkwinkel von 270° entsteht. Im Übrigen ist die Vorrichtung mit dem vorherigen Ausführungsbeispiel identisch.

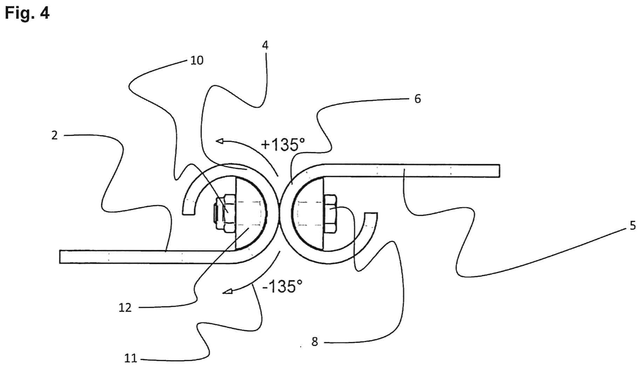

Fig. 4 zeigt eine Seitenansicht einer schematischen Darstellung einer alternativen erfindungsgemäßen Vorrichtung 1 mit einer Hülsenmutter als Verbindungselement 8 und einer Schraube als Konterelement 10, wobei die Vorrichtung vergleichbar mit den vorherigen Ausführungsbeispielen ist. Durch die Verwendung einer Hülsenmutter ist die Vorrichtung 1 nicht mehr ohne weiteres in einer bestimmten Winkelstellung arretierbar. Durch die Wahl einer geeigneten Länge der Hülsenmutter kann jedoch verhindert werden, dass die Vorrichtung 1 auseinandergezogen wird. Alternativ könnte aber auch ein Bolzen mit einem Splint oderdergleichen verwendet werden.

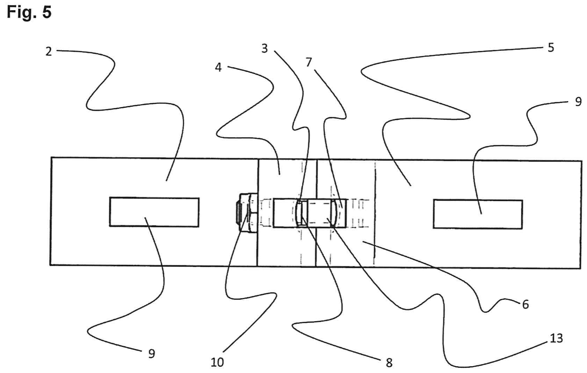

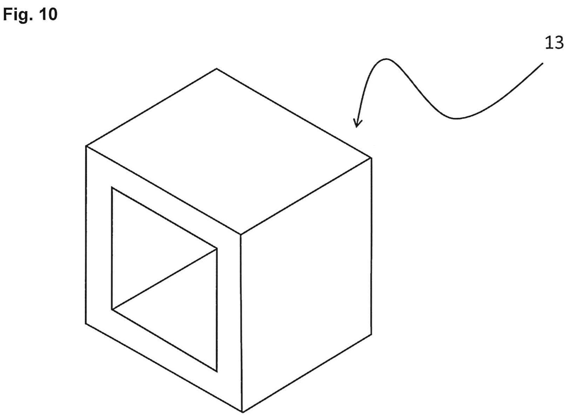

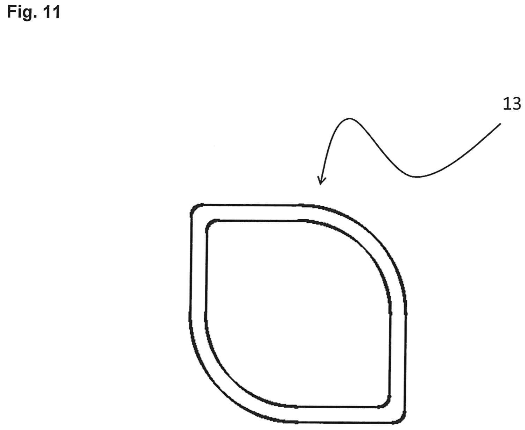

Fig. 5 zeigt eine Aufsicht einer schematischen Darstellung einer erfindungsgemäßen Vorrichtung 1 mit einer Verdrehsicherung 13. Die Verdrehsicherung 13 ist im vorliegenden Beispiel ein quadratischer Körper, der auf das Verbindungselement 8 aufgezogen wird und mit seiner Außenkontur formschlüssig in die Öffnungen 3 und 7 passt. Beispielshafte Verdrehsicherungen finden sich in den Fig. 10 und 11.

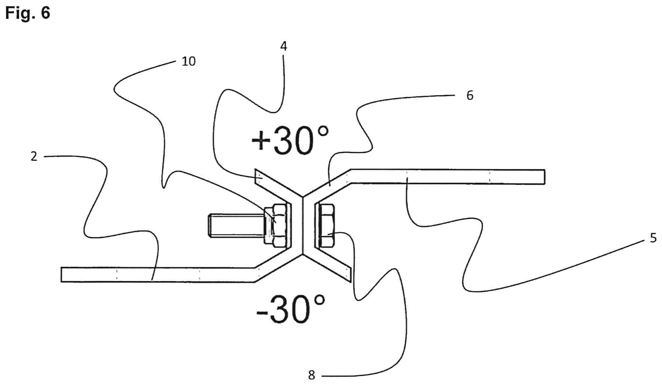

Fig. 6 zeigt eine Seitenansicht einer schematischen Darstellung einer alternativen erfindungsgemäßen Vorrichtung 1 mit einem abgekanteten gebogenen Bereich, wodurch dieser eine an ein Hexagon erinnernde Form erhält. Denkbar wäre es auch, dass ein abgeplattetes Rohr als Bauteil 2 oder 5 verwendet wird.

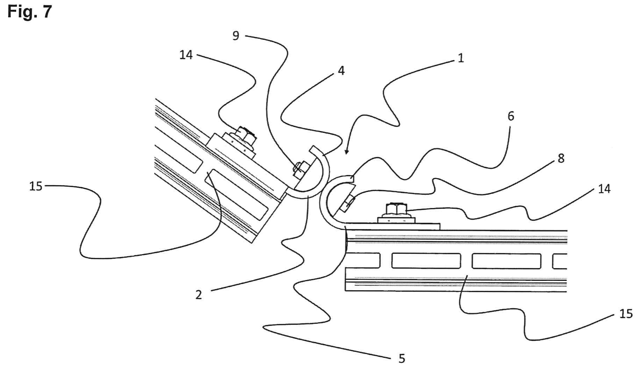

Fig. 7 zeigt eine schematische Darstellung der erfindungsgemäßen Vorrichtung 1 eingebaut in ein Konstrukt. Die Vorrichtung 1 ist mittels Befestigungselement 14 an jeweils einem länglichen Element bzw. einer Strebe 15 eines Konstruktes befestigt. Die Streben 15 weisen ein rechteckiges Profil mit Öffnungen auf, in welche das Befestigungselement 14 hineingeschraubt werden kann, um das Bauteil 2 oder 5 an der Strebe zu befestigen. Hierzu können dem Fachmann bekannt Befestigungsmittel und -verfahren verwendet werden, wie beispielsweise das vorsehen einer Schraube mit Mutter oder ein Rastmechanismus.

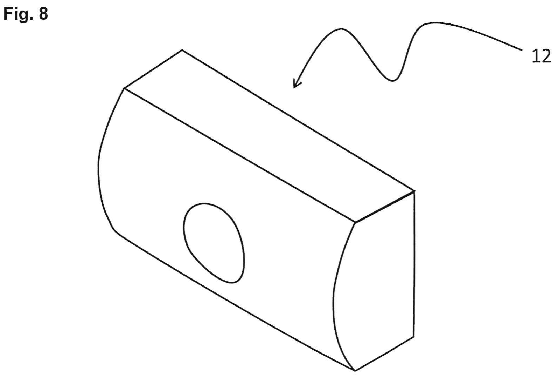

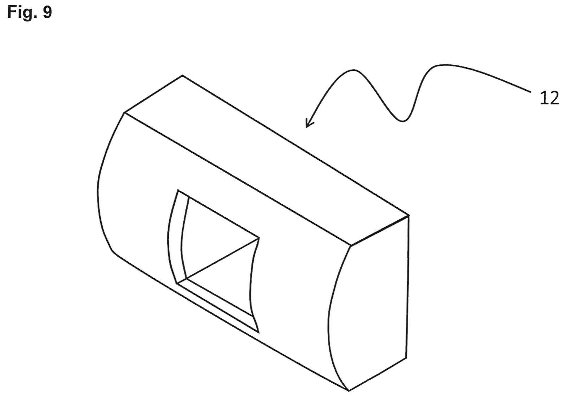

Fig. 8 und Fig. 9 zeigen alternative schematische Darstellungen erfindungsgemäßer Füllkörper 12, wobei der in Fig. 8 dargestellte Füllkörper 12 eine runde Öffnung aufweist und der in Fig. 9 dargestellte Füllkörper eine rechteckige Öffnung aufweist. Letztere ist insbesondere vorteilhaft für die Verwendung mit einer Verdrehsicherung 13.

Fig. 10 und Fig. 11 zeigen schematische Darstellungen unterschiedlicher Varianten erfindungsgemäßer Verdrehsicherungen 13. Eine solche Verdrehsicherung 13 verhindert ein Verdrehen der Bauteile 2 und 5 gegeneinander, sodass lediglich eine Bewegung der Bauteile 2 und 5 entlang der primären Biegungsrichtung möglich ist. Alternativ könnte beispielsweise auch eine Verdrehsicherung 13 vorgesehen werden, bei der nur der Teil, der lediglich in die Öffnung 3 des Bauteils 2 hineinragt, eine rechteckige Außenkontur aufweist und der Teil, der in die Öffnung 7 des Bauteils 5 hineinragt, beispielsweise rund ist. In der Variante der Fig. 11 würde sich eine Begrenzung der Verdrehung auf einen Winkel von weniger als 90° ergeben. Es wäre auch denkbar, beide Enden der Verdrehsicherung 13 mit identischen oder rotatorisch versetzten Außenkonturen auszustatten, die nur eine oder mehrere Ecken aufweisen. Weiterhin könnte auch eine Manschette in der Mitte der Verdrehsicherung 13 vorgesehen sein, welche zwischen die Bauteile 2 und 5 zum Liegen kommt, um beispielsweise als Puffer zu dienen. Alternativ könnte auch eine die Vorrichtung umschließende Klammer als Verdrehsicherung 13 verwendet werden. Diese würde um den Kontaktbereich der beiden Bauteile herum angebracht werden. Weiterhin könnte die Verdrehsicherung 13 als Teil des Verbindungselementes 8 ausgestaltet sein, beispielsweise könnte eine Schraube mit abgeplatteten gegenüberliegenden Flächen verwendet werden.

Alle hier dargestellten Merkmale können sowohl einzeln als auch in beliebiger Kombination miteinander erfindungswesentlich sein.

### Bezugszahlenliste

- 1: Vorrichtung
- 2: Erstes Bauteil
- 3: Gebogener Bereich des ersten Bauteils
- 4: Öffnung des ersten Bauteils
- 5: Zweites Bauteil
- 6: Gebogener Bereich des zweiten Bauteils
- 7: Öffnung des zweiten Bauteils
- 8: Verbindungselement
- 9: Öffnung
- 10: Konterelement
- 11: Pfeil
- 12: Füllkörper
- 13: Verdrehsicherung
- 14: Befestigungselement
- 15: Strebe

## Patentansprüche

1. Vorrichtung (1) zur Verbindung mindestens zweier Objekte umfassend
- ein erstes Bauteil (2) mit mindestens einer Öffnung (3) und mindestens einem gebogenen Bereich (4) mit mindestens einer primären Biegungsrichtung, wobei die Öffnung (3) mindestens teilweise in dem gebogenen Bereich (4) angeordnet ist,
- mindestens ein zweites Bauteil (5) mit mindestens einer Öffnung (7),
- mindestens ein Verbindungelement (8), wobei mindestens ein Verbindungselement (8) durch mindestens eine Öffnung (3) des ersten Bauteils (2) hindurchführbar ist,
**dadurch gekennzeichnet,**
**dass** mindestens eine Öffnung (3) des ersten Bauteils (2) in mindestens einer Richtung einen Freiheitsgrad für eine Bewegung des mindestens einen Verbindungselementes (8) aufweist, wobei mindestens ein Freiheitsgrad mindestens teilweise parallel zu der primären Biegungsrichtung angeordnet ist und das erste Bauteil (2) relativ zu mindestens einem weiteren Bauteil (5) entlang mindestens eines Freiheitsgrades radial bewegbar ist.

2. Vorrichtung (1), nach Anspruch 1,
**dadurch gekennzeichnet,**
**dass** das mindestens eine Verbindungelement (8) eine Schraube, ein Bolzen, oder dergleichen ist.

3. Vorrichtung (1), nach Anspruch 1 oder Anspruch 2,
**dadurch gekennzeichnet,**
**dass** an mindestens einem Ende des mindestens einen Verbindungelementes (8) mindestens ein entsprechendes Konterelement (10) angeordnet ist, wobei das Konterelement (10) ein Splint, eine oder mehrere Muttern oder dergleichen ist.

4. Vorrichtung (1), nach einem der vorhergehenden Ansprüche,
**dadurch gekennzeichnet,**
**dass** das erste Bauteil (2) und/oder das mindestens zweite Bauteil (5) aus einem Flachblech, Rohr oder Profil durch ein Biegeverfahren, als Frästeil oder Gussteil gefertigt ist.

5. Vorrichtung (1), nach einem der vorhergehenden Ansprüche,
**dadurch gekennzeichnet,**
**dass** an dem ersten Bauteil (2) und/oder dem mindestens zweiten Bauteil (5) mindestens ein Befestigungselement (14) angeordnet ist, wobei das mindestens eine Befestigungselement (14) dazu eingerichtet ist, das Bauteil mit einem ersten und/oder mindestens einem zweiten Objekt reversibel oder fest zu verbinden.

6. Vorrichtung (1), nach einem der vorhergehenden Ansprüche,
**dadurch gekennzeichnet,**
**dass** um mindestens eines der Verbindungselemente (8), wobei dieses mindestens eine longitudinale Hauptausdehnung aufweist, mindestens eine Verdrehsicherung (13) angeordnet ist, wobei die Verdrehsicherung (13) eine Rotation des ersten Bauteils (2) und/oder mindestens zweiten Bauteils (5) um die longitudinale Hauptausdehnung mindestens einschränkt.

7. Vorrichtung (1), nach Anspruch 6,
**dadurch gekennzeichnet,**
**dass** die Verdrehsicherung (13) die Rotation um die longitudinale Hauptausdehnung mindestens auf einen Winkelbereich von höchstens 180° einschränkt.

8. Konstrukt umfassend
- eine Vielzahl länglicher Elemente (15),
**dadurch gekennzeichnet,**
**dass** das Konstrukt mindestens ein Gelenk aufweist, wobei das mindestens eine Gelenk mindestens zwei der länglichen Elemente (15) miteinander verbindet und das mindestens eine Gelenk eine Vorrichtung (1) nach einem der Ansprüche 1 bis 7 ist.

9. Verfahren zur Ausbildung eines Gelenkes zur Verbindung zweier Objekte, **dadurch gekennzeichnet,**
**dass** das Gelenk eine Vorrichtung (1) nach einem der Ansprüche 1 bis 7 umfasst und das Gelenk derart gebildet wird, dass
- die Öffnung (3) des ersten Bauteils (2) mindestens teilweise überlappend mit mindestens einer Öffnung (7) mindestens eines weiteren Bauteils (5) angeordnet wird oder ist, wobei eine Verbindungsstelle geschaffen wird oder wurde,
- mindestens ein Verbindungselement (8) durch die Verbindungsstelle durchgeführt wird oder wurde, und
- das Verbindungselement (8) gegen ein Hinausziehen gesichert wird.

10. Verfahren, nach Anspruch 9,
**dadurch gekennzeichnet,**
**dass** eine Verdrehsicherung (13) um das Verbindungselement (8) angeordnet wird oder ist.
